# EUROPEAN PATENT APPLICATION

(11) **EP 1 367 495 A1**
(43) Date of publication of application: **03.12.2003**
(21) Application number: 02703948.6
(22) Date of filing: 08.03.2002
(51) Int. Cl.: G06F 13/00, G06F 12/00, G06F 17/30, G06F 17/21

(54) **RELAY METHOD, USER INTERFACE PROVIDING METHOD, PROXY SERVER DEVICE, CLIENT DEVICE, PROGRAM AND RECORDING MEDIUM**

(30) Priority: 09.03.2001 JP 2001067479
(71) Applicant: NTT DoCoMo, Inc., Tokyo 100-6150 (JP)
(72) Inventor: CHIKADA, Michiyasu, Ichikawa-shi, Chiba 272-0111 (JP); TANIGUCHI, Tetsuya, Yokohama-shi, Kanagawa 224-0029 (JP)
(74) Representative: HOFFMANN - EITLE
(86) International application number: JP0202193
(87) International publication number: WO02073424

(57) **Abstract**

LWP 16 obtains a text file from WWW server 14A via Internet 13 and data sizes of image files designated by IMG tag in the text file, and transmits the text file to DTE 11 via Internet 13, gateway server 15 and mobile packet communication network 12 after adding letter strings according to data sizes to the ALT property values of IMG tag. On DTE 11, ALT property values containing letter strings according to data sizes are displayed instead of images, which have not been displayed.

## Description

### Technical Field

The present invention relates to a user interface provision method for providing a user interface on the basis of files received from a server device; a client device for executing the user interface provision method; a relaying method for relaying data between a server device and a client device; a substituting server device for executing the relaying method; a program for prompting a computer to execute each of the above-mentioned methods; and a recording medium for recording and storing the program read out by the computer.

### Background Art

Content on the World Wide Web (WWW) that is viewable over the Internet basically consists of a combination of corresponding HTML (Hyper Text Markup Language) text and image files included in the text. To view or download such content using a terminal, a user must access a particular server device.

For a user to access a server device, a TCP (Transmission Control Protocol) connection between the terminal and the desired server device is established. A request containing a URI (Uniform Resource Identifier) designating content to be downloaded is then transmitted from the terminal to the server device via the TCP connection. In response to the request containing the URI received from the terminal, a text file corresponding to the URI is transmitted from the server device to the terminal; after which the TCP connection is severed, and the content of the transmitted text file is interpreted by the terminal. Then, in accordance with the outcome of the interpretation, a suitable user interface is provided, which can display on the terminal the transmitted text file in the form of letter strings, ruled lines and so forth, which are designated to be displayed by the text file. The request containing the URI transmitted from the terminal to the desired server device, and the response described above are each written in HTTP (Hyper Text Transfer Protocol).

In an instance that a text file received by the terminal from the server device should include an image file, the image file is received at the terminal on the basis of a description of the file in the text file. This process is the same as the above-mentioned process of obtaining a text file. Then, at the terminal which obtains image files, the user interface is corrected. This process is carried out for each image file to be included in the text file received at the terminal, to enable image files to be displayed in addition to text files consisting of letter strings and ruled lines.

It is to be noted that the such a terminal is seldom directly connected to the Internet; and more commonly, is connected via a gateway server (access server) that establishes an Internet protocol. Such a gateway server device is connected to a network, such as an intranet system or public network, for communication with a terminal, and relays data between a terminal and a desired WWW server. Gateway server devices that have a substituting server function are also widely used.

As described above, the process of obtaining content on the WWW consists of text file acquisition stage and an image file acquisition stage. However, since image files commonly contain considerably more data than text files, while text files can be promptly displayed, image files take considerably longer. Notably, in a case that data sizes of image files are considerably larger than text files in which they are to be included, it takes far longer to display such an image relative to time to display a corresponding text file. Further, as a data forwarding speed in a communication path between a terminal and a gateway server device becomes slower, a time required for an image to be displayed becomes longer. In recent years, users accessing the Internet via mobile packet communication networks have greatly increased. However, since a data forwarding speed of a mobile packet communication network is generally slower than that of a fixed network, there exists a further problem that a time required for images to be downloaded and displayed from the Internet is considerably long. Since such access is subject to a communication charge of the mobile packet communication network, downloading and displaying image files is expensive and comprises the greater part of the access cost.

To reduce communication costs, a user may decide not to display image files, either by setting the terminal, or by stopping content download once a text file has been obtained. However, a result is that not only large image data files are prevented from being downloaded, but also small image data files. Image files can be obtained in a small amount of time as far as data sizes of image files are sufficiently small, and there is a possibility for the user to reap favorable outcomes by confirming images displayed by such image files for several kinds of judgments or operations. In other words, obtaining a text file only or discontinuation after obtaining a text file only means discarding such possibility. However, with regard to the acquisition process for WWW contents, a data size of an image file can not be detected unless the image file is actually obtained. Hence, a user is not able to determine whether s/he should wait for an image to be displayed.

Also, for content for which a client side image map made up of a combination of an IMG tag for filling in an image, and a MAP tag for correlating links with each of the domains of the images, a client side image map does not function effectively until images are displayed. In other words, display of the acquired WWW content is inadequate when a client side image map is used, because the "image map" shows a blank in place of images not yet displayed suggesting that some of the images are missing. This makes the process both difficult to comprehend and use. Ultimately, a user having obtained information on links is not able to use the links or read addresses of the links until all image files are obtained as the client side map does not function accurately unless the images expressed by the image files are displayed.

### Disclosure of Invention

The present invention was developed to overcome the stated problems of the conventional art. The object of the present invention is to provide a user interface provision method and a relaying method, which are able to promptly provide helpful information for determination, operation and so forth to a user; a client device and a substituting server device, which execute each of these methods; a program executed by a computer to carry out each of these methods; and a computer-readable recording medium for recording and storing the program.

To solve the stated problems of the conventional art, the present invention provides a relaying method in a substituting server device for relaying data between a server device containing a text file and image files, and a client device for obtaining, after the text file is obtained, image files corresponding to the text file, in obtaining the text file from the server device, obtaining information on image files corresponding to the obtained text file, changing the description of the text file on the basis of information corresponding to the image files , and transmitting to the client device the changed text file; a program for causing a computer to execute the relaying method; and a computer-readable recording medium storing the program.

Also, to solve the stated problems of the prior art, the present invention provides a substituting server device for relaying data between a client device and a server device, comprising: a first communication means for communicating with a server device containing a text file and image files; a second communication means for communicating with a client device for obtaining the text file and the image files corresponding to the text file from the server device; a text obtaining means for obtaining the text file from a server device by using the first communication means; a relevant information obtaining means for obtaining by using the first communication means, information on image files corresponding to a text file obtained by the text obtaining means; a text changing means for changing description of a text file obtained by the text obtaining means on the basis of information obtained by the relevant information obtaining means; and a text transmission means for transmitting to the client device, a text file whose description is changed by the text changing means by using the second communication means.

By using a relaying method, a program, a recording medium, or a substituting server device of the present invention, the description of a text file to be transmitted from a server device to a client device can be changed on the basis of information on image files corresponding to the text file in the substituting server device.

Also, to solve the above-mentioned problems, the present invention provides, a relaying method in a substituting server device for relaying data between a server device containing a text file and image files and a client device for obtaining, after obtaining the text file, image files corresponding to the text file, for obtaining the text file from the server device, extracting related information which cannot be obtained before image files corresponding to the text file are obtained in the client device, changing the description of the text file on the basis of the related information, and transmitting to the client device the text file whose description is changed; a program for causing a computer to execute the relaying method; and a computer-readable recording medium for storing the program.

Also, to solve the stated problems, the present invention provides a substituting server device for relaying data between a client device and a server device comprising: a first communication means for communicating with a server device containing a text file and image files; a second communication means for communicating with a client device for obtaining the text file and the image files corresponding to the text file from the server device; a text obtaining means for obtaining the text file from a server device by using the first communication means; a related information extraction means for extracting from a text file obtained by the text obtaining means by the client device, information which cannot be obtained before image files corresponding to the text file are obtained; a text changing means for changing the description of a text file obtained by the text obtaining means on the basis of the related information; and a text transmission means for transmitting to the client device, a text file whose description is changed by the text changing means by using the second communication means.

By using a relaying method, a program, a recording medium or a substituting server, a text file to be transmitted from a server device to a client device is transmitted to a client device after the description is changed in a substituting device on the basis of related information which cannot be obtained before image files corresponding to the text file are obtained.

Also, to solve the above-mentioned problems, the present invention provides a user interface provision method for providing user interfaces for obtaining the text file from a server device containing a text file and image files via a substituting server device, obtaining the text file in addition in a client device for obtaining image files corresponding to the text file, extracting link information from substituting displayed letter strings written to be displayed when images are not displayed in the obtained text file, and providing user interfaces by using the extracted link information; a program for causing a computer to execute the user interface provision method; and a computer-readable recording medium storing the program.

Also, to solve the above-mentioned problems, the present invention provides a client device which communicates with a server device containing a text file and image files corresponding to the text file via the substituting server comprising: a communication means for communicating with a substituting server device; a link information extraction means for extracting link information from substituting displayed letter strings written to be displayed when images are not displayed in a text file obtained by a text obtaining means; and a user interface provision means for providing user interfaces by using link information extracted by a link information extraction means.

By using a user interface provision method, a program, a recording medium or a client device such as these, user interfaces are provided on the basis of link information in substituting displayed letter strings written to be displayed when images are not displayed in the obtained text file in a client device for obtaining image files corresponding to the text file after the text file is obtained.

### Brief Description of Drawings

Fig.1 is a diagram showing an entire configuration of a data delivery system of the first embodiment of the present invention.
Fig.2 is a sequence diagram explaining a general outline of the operation of the same system.
Fig.3 is a block diagram showing a configuration of DTE 11 composing the same system.
Fig.4 is a flowchart showing a flow of a data setting process using a profile setting function DTE 11 is equipped with.
Fig.5 is a diagram showing an example of a setting picture of profile information on DTE 11.
Fig.6 is a diagram showing an example of a setting picture of profile information on DTE 11.
Fig.7 is a flowchart showing a flow of a content acquisition process using a content acquisition function DTE 11 is equipped with.
Fig.8 is a block diagram showing a configuration of LWP 16 composing the same system.
Fig.9 is a flowchart showing a flow of a content substituting acquisition process using a content substituting acquisition function LWP 16 is equipped with.
Fig.10 is a flowchart showing a flow of changing process of ALT property value carried out by LWP 16.
Fig. 11 is a sequence diagram showing an operation of the same system (without displaying image frames, and WWW server 14A).
Fig.12 is a diagram showing a displayed picture of DTE 11 (before images are obtained) in the operation shown in Fig. 11.
Fig.13 is a diagram showing a displayed picture of DTE 11 (after images are obtained) in the operation shown in Fig.11.
Fig.14 is a sequence diagram showing an operation of the same system (without displaying image frames, and WWW server 14B).
Fig.15 is a diagram showing a displayed picture of DTE 11 (before images are obtained) in the operation shown in Fig.14.
Fig.16 is a diagram showing a displayed picture of DTE 11 (after images are obtained) in the operation shown in Fig.14.
Fig.17 is a sequence diagram showing an operation of the same system (displaying image frames, and WWW server 14A).
Fig.18 is a diagram showing a displayed picture of DTE 11 (before images are obtained) in the operation shown in Fig.17.
Fig.19 is a sequence diagram showing an operation of the same system (displaying image frames, and WWW server 14B).
Fig.20 is a diagram showing displayed images of DTE 11 (before images are obtained) in the operation shown in Fig. 19.
Fig.21 is a diagram showing an entire configuration of a data delivery system of the second embodiment of the present invention.
Fig.22 is a flowchart showing a flow of an ALT property monitoring process carried out by DTE 51, which composes the system shown in Fig.21.
Fig.23 is a flowchart showing a flow of an ALT property conversion process carried out by DTE 51.
Fig.24 is a flowchart showing a flow of a client side image map process carried out by LWP 52, which composes the system shown in Fig.21.
Fig.25 is a sequence diagram showing an operation of the system shown in Fig.21 (image frames are displayed).
Fig.26 is a diagram showing a displayed picture of DTE 51 (before images are obtained) in the operation shown in Fig.25.

### Description of References

- 11,51: DTE
- 12: Mobile Packet Communication Network
- 13: Internet
- 14A, 14B: WWW Server
- 15: Gateway Server
- 16, 52: LWP

### Best Mode of Carrying out the Invention

Hereinafter, embodiments of the present invention will be explained by referring to figures. However, the present invention is not limited to such embodiments, and contains any mode within the scope described in patent claims.

### [1] Embodiments of the Invention

### [First Embodiment]

### (1) Entire Configuration

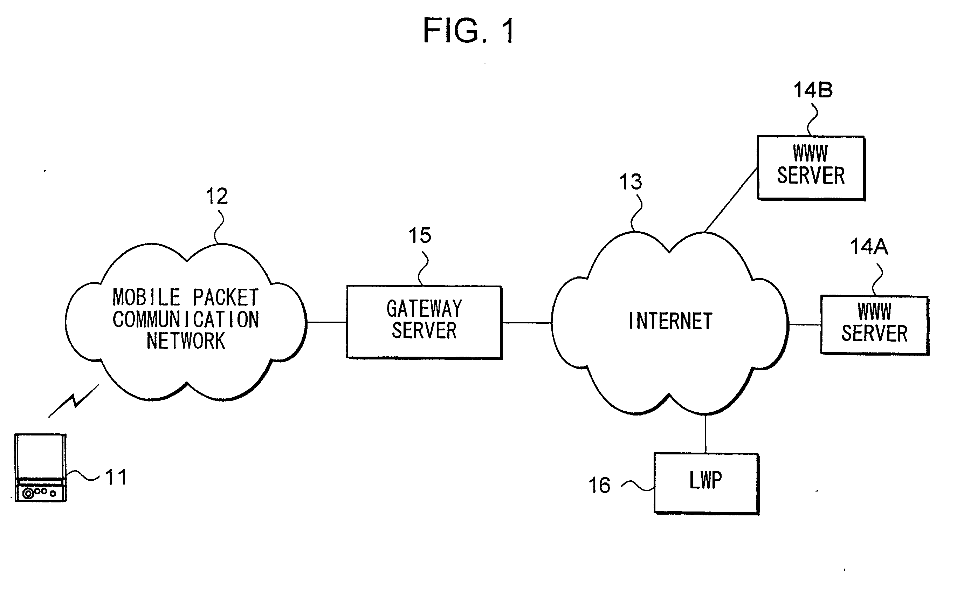

Fig. 1 is a diagram showing the entire configuration of the data delivery system of the first embodiment of the present invention. Details will be described afterwards, but the system shown in the figure basically, in a data terminal device (hereinafter, referred to as DTE) which obtains data via a communication network, accommodates the user by enabling him/her to estimate costs (the amount of time and communication) for obtaining image data by displaying sizes of image data when images which should be displayed are not displayed. Also, reduction of the traffic of the communication network is achieved.

In the figure, two WWW servers and one DTE are represented so as to avoid complicating the figure and the explanation, but several WWW servers and DTEs actually exist. Also, the DTE is equipped with a cellular telephone function, and voice communication can be carried out via the mobile communication network, but the explanation and exemplification regarding voice communication is omitted since details regarding voice communication do not directly relate to the present invention.

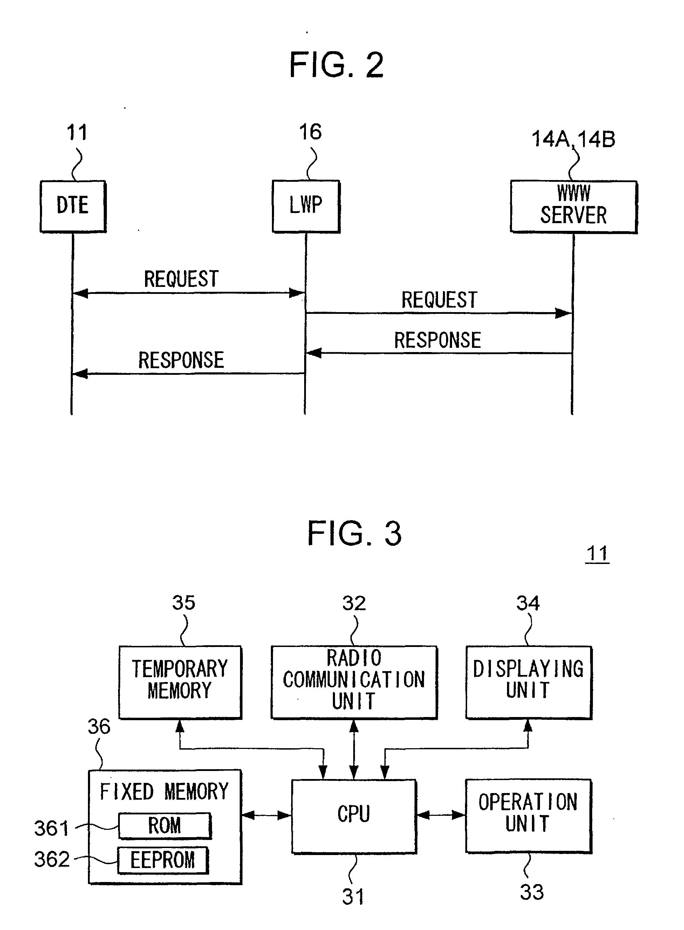

In the data delivery system of Fig. 1, as shown in Fig.2, a request transmitted from DTE 11 (a request in accordance with degenerated HTTP) reaches lightweight substituting server (hereinafter, referred to as LWP) 16 via mobile packet communication network 12, gateway server 15 and Internet 13 in that order. A request corresponding to the request from DTE 11 (a request in accordance with common HTTP) is transmitted to WWW server 14A or 14B from LWP 16 via Internet 13. As a WWW server receives a request from LWP 16, the WWW server returns a response to the received request via Internet 13. The response is received by LWP 16. Then, a response after going through the changing process which is described afterwards, is transmitted to DTE 11 from LWP 16 as the response corresponding to the request from DTE 11. A response from LWP 16 is received by DTE 11 via Internet 13, gateway server 15, and mobile packet communication network 12 in that order.

### (2) Configuration and Function of WWW Server

A WWW server is a common computer system containing WWW, which is accessed by using Internet 13, and is equipped with the function of a HTTP server. As a WWW server receives a request in accordance with HTTP via Internet 13, a WWW server basically transmits a response corresponding to the request to Internet 13. For instance, a WWW server stores files such as HTML data or image data, and when the received request is a request using the GET method, reads out the file corresponding to the URL designated by the GET method, and transmits a response containing the file.

Furthermore, WWW server 14A, when the received request is a request using the HEAD method, obtains header information on the file designated by the HEAD method, and transmits a response containing header information. On the other hand, WWW server 14B does not permit use of the HEAD method, and in the instance, a request for using the HEAD method is received, a response containing information that use of the HEAD method is not permitted is transmitted.

### (3) Configuration and Function of DTE 11

Fig.3 is a block diagram showing a configuration of DTE 11. In the figure, CPU31 controls each unit of DTE 11 and carries out several types of data processes. Radio communication unit 32 is a communication interface containing an antenna and so forth. Radio communication unit 32 transmits data provided by CPU 31 to mobile packet communication network 12, and sends data received via mobile packet communication network 12 to CPU 31.

Operation unit 33 is equipped with operation parts (such as a numerical keyboard or a cursor key) operated by the user, and sends data showing the operation content of the operation part to CPU 31. Displaying unit 34, for instance, is a liquid crystal display, and displays images corresponding to image data provided from CPU 31. Temporary memory 35, for instance, is RAM (Random Access Memory), and functions as the work area of CPU 31. Fixed memory 36, for instance, includes ROM (Read-Only Memory) 361 to store data for not allowing data to be rewritten and EEPROM (Electrically Erasable Programmable ROM) 362 to store data for allowing data to be rewritten. In ROM 361, is stored some software such as an operating system or a web browser, and in EEPROM 362, is stored some information set by the user and so forth. CPU 31 performs some of the control functions of each of the above-mentioned units and some processes of several types of data by executing the software stored in ROM 361.

Next, some functions added to DTE 11 when CPU 31 executes software stored in ROM 361 are explained. However, only the functions directly relating to operations of the present embodiment are explained since these functions are approximately the same as functions which common cellular telephones with a web browser are equipped with.

### (3-1) Profile Setting Function

The profile setting function is a function of setting information such as the one on the ability of DTE 11 or communication between the LWP and the DTE, which the user designates as profile information.

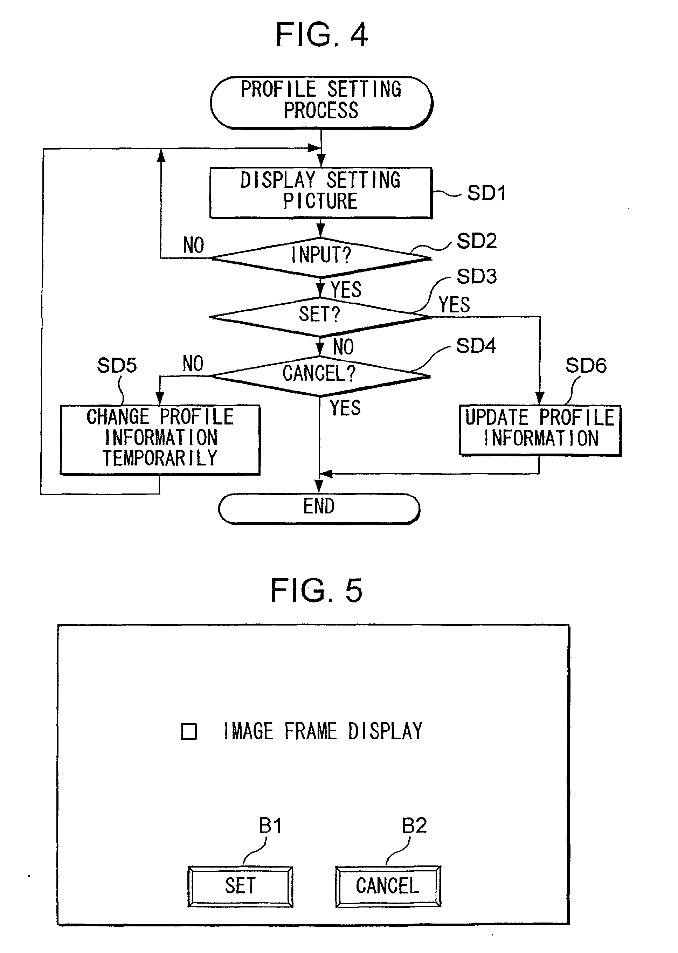

Fig.4 is a flowchart showing a flow of the profile setting process using the profile setting function DTE 11 is equipped with. As shown in the figure, as the user inputs the command of commencement of the profile setting process by using operating unit 33 of DTE 11, CPU 31 reads out profile information from EEPROM 362, stores profile information in temporary memory 35 temporarily, controls displaying unit 34, and displays a setting picture of profile information on the basis of profile information which is momentarily stored in temporary memory 35 (Step SD 1). One example of the setting picture is shown in Fig.5. The setting picture shows profile information which is set, and prompts the user to set profile information. The example of Fig.5 shows that profile information is set not to display image frames when images are displayed. "Image frame" is a frame surrounding the periphery of the image, and it can be displayed when the image is not displayed.

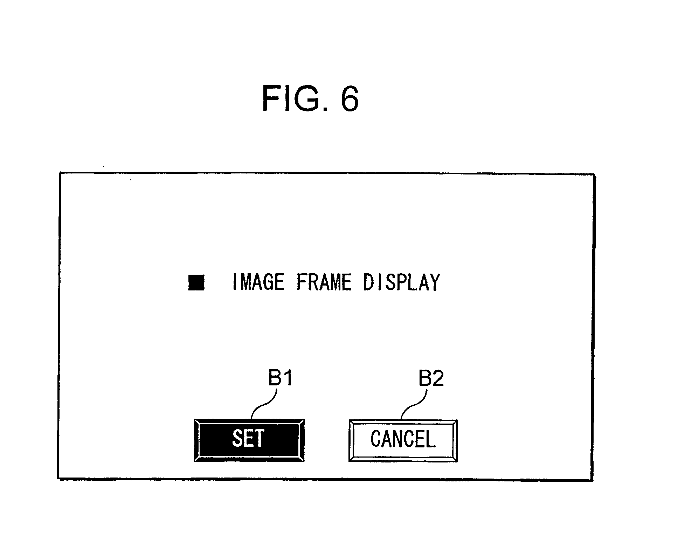

As the user operates operation unit 33 and performs a certain inputting operation after confirming images (Step SD 2), CPU 31 determines whether the content of the input is for pressing setting button B1 or pressing cancel button B2 (Step SD 3 and Step SD 4). When the inputting operation is neither the one for setting nor the one for canceling, the profile information which is momentarily stored in temporary memory 35 is changed (Step SD 5), and the setting picture of the profile information is displayed again on the basis of the profile information which is changed as shown in Fig.6.

When the content of the input is for pressing setting button B1, CPU 31 renews the profile information by overwriting the profile information, which is momentarily stored in temporary memory 35 on the profile information, which is stored in EEPROM 362, and concludes the profile setting process (Step SD 6). On the other hand, when the content of the input by the user is for pressing cancel button B2, CPU 31 concludes the profile setting process without renewing the profile information. CPU 31 controls displaying unit 34 when CPU 31 concludes the profile setting process, and closes the setting picture.

### (3-2) Content Acquisition Function and Interpretation·Displaying Function

The content acquisition function is a function of downloading a HTML file, an image file and so forth from a WWW server, and is achieved by using HTTP client function that DTE 11, which executes the software, is equipped with. Also, the interpretation·displaying function is a function of interpreting and displaying the downloaded contents, and is achieved by using the HTML interpretation function that DTE 11, which executes the software, is equipped with, and the user interface provision function.

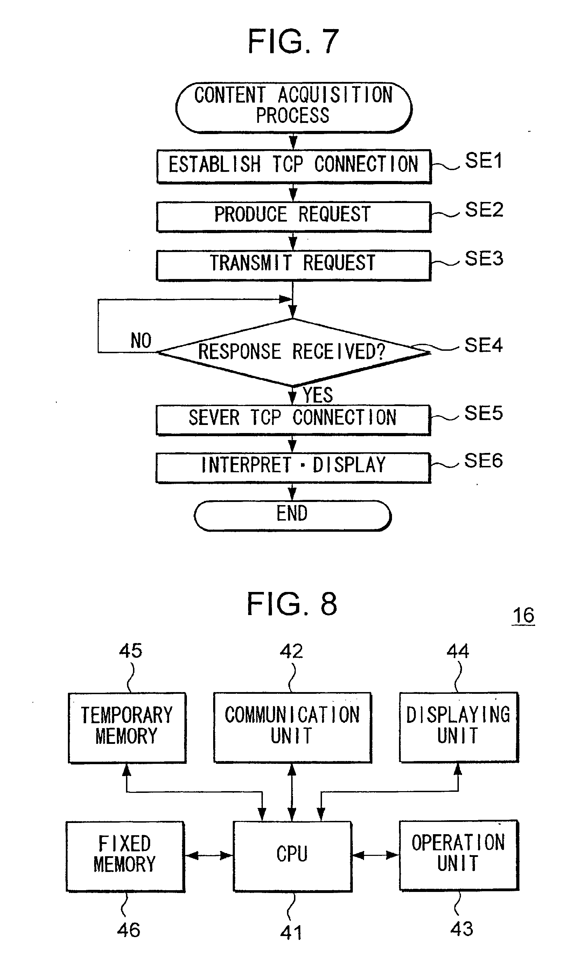

Fig.7 is a flowchart showing a flow of the content acquisition process using the content acquisition function that DTE 11 is equipped with. As shown in the figure, when the user inputs the command to commence the content acquisition process by using operation unit 33 of DTE 11, CPU 31 controls radio communication unit 32, and establishes the TCP connection (hereinafter, referred to as the client TCP connection) between CPU 31 and LWP 16 (Step SE 1). Then, CPU 31 produces a request using the GET method of HTTP (Step SE 2). The request, for instance is a request line such as "GET/PF/?http://www.*****.co.jp/ HTTP/1.0." The request line contains URI (http://www*****.co.jp/) on the basis of the command to commence which the user inputs by using operation unit 33 of DTE 11, and information (PF) corresponding to profile information (displaying image frames) which is set beforehand. When the profile information is information denoting that image frames are not displayed, the request line is "GET//?http://www.*****.co.jp/HTTP/1.0."

Then, CPU 31 transmits the above-mentioned request to LWP 16 via the above-mentioned TCP connection (Step SE 3). Hereinafter, CPU 31 waits for reception of a response to the above-mentioned request (Step SE 4). When the response is received, the above-mentioned TCP connection is severed (Step SE 5), and contents contained in the response are interpreted and displayed (Step SE 6). After a request is transmitted, the timeout process is carried out if the response cannot be received after the designated amount of time passes. The timeout process of this type does not directly relate to the operation of the present embodiment; therefore, the explanation regarding the timeout process is omitted in the present embodiment.

With regard to processes of interpreting and displaying, contents are interpreted in accordance with HTML grammar. When contents are HTML data, CPU 31 interprets HTML data first. Then, CPU 31 produces image data of the layout corresponding to the description contained in the HTML data, and provides the image data for displaying unit 34. With regard to the interpretation of HTML data, CPU 31 carries out a process corresponding to several kinds of tags written in a hierarchical fashion. Among the processes that CPU 31 carries out, the processes, which directly relate to the operation of the present embodiment are explained as follows.

### ① IMG Tag Process

The IMG tag is the tag for inserting an image into a HTML document. The IMG tag contains the SRC property for designating an image file, the WIDTH property and the HEIGHT property for designating an image size, the ALT property for designating a letter string to be displayed when an image is not displayed, the USEMAP property for achieving an image map, and so forth. With regard to the IMG tag, CPU 31, which controls displaying unit 34, obtains the image file designated by the SRC property, and displays the image expressed by the image data in the file size designated by the WIDTH property and the HEIGHT property. Also, when the image is not displayed, CPU 31 controls displaying unit 34, and displays the letter string designated by the ALT property instead of the image.

### ② Client Side Image Map Process

A client side image map is achieved by combining the IMG tag and the MAP tag, and is written in a fashion of designating the map defined by the MAP tag by the USEMAP property of the IMG tag. When the client side image map is displayed, CPU 31 controls displaying unit 34, controlling unit 33 and radio communication unit 32, sets the HREF property in each of a plurality of domains within the image, and carries out a process on the basis of the HREF property value set in the domain chosen by the user (the URI of the link address).

### ③ A Tag Process

The A tag is the tag for filling an anchor in a letter string, and contains the HREF property and so forth. With regard to a letter string and the A tag to which the HREF property is set, CPU 31 displays the letter string by controlling displaying unit 34, controlling unit 33 and radio communication unit 32. When the letter string is chosen by the user, the process for obtaining the file corresponding to the HREF property begins.

### (4) Configuration and Function of LWP 16

Fig. 8 is a block diagram showing the configuration of LWP 16. LWP 16 is in the same hardware configuration as common proxy server. The description becomes complicated if everything is explained; hence, only the minimum configuration for explaining the operation of the present embodiment is shown in Fig.8.

In Fig.8, CPU 41 controls each unit of LWP 16, and carries out several types of data processes. Communication unit 42 is an interface for carrying out communication in accordance with TCP/IP (Transmission Control Protocol/Internet Protocol) and HTTP via Internet 13. Communication unit 42 transmits data provided by CPU 41 to Internet 13, and sends data received via Internet 13 to CPU 41.

Controlling unit 43 is operated by a controller of LWP 16. Controlling unit 43 is equipped with devices such as a keyboard or a mouse, and sends data a controller inputs by using these devices to CPU 31. Displaying unit 44 consists of, for instance CRT (Cathode Ray Tube) and its controlling device, and displays images corresponding to image data provided by CPU 41. Temporary memory 45, for instance, is RAM, and functions as the work memory of CPU 41. Fixed memory 46 consists of, for instance, ROM and a hard disc, and is stored with an activation program, an operating system, software for carrying out a substituting process, and so forth. CPU 41 carries out control of each of the above-mentioned units or several types of data processes by executing software stored in fixed memory 46.

Next, functions added to LWP 16 when CPU 41 executes software stored in fixed memory 46 are explained. However, with regard to functions which common proxy servers are equipped with, only the functions, which directly relate to the operation of the present embodiment are explained.

### (4-1) HTTP Processing Function

HTTP processing function is a function to relay data in accordance with HTTP when CPU 41 executes software by using the HTTP client function (a function corresponding to common HTTP) and the HTTP server function (a function corresponding to degenerated HTTP), which LWP 16 is equipped with. With regard to the relay, CPU 41 recognizes the field composing the request in accordance with HTTP and the response, and carries out the appropriate process. For instance, "Via" in the general header field of the HTTP request header is not set in DTE 11, but is set in LWP 16. Also, "Host" in the request header field is set in DTE 11 and LWP 16 respectively. Furthermore, "Proxy-Authorization" and "Client ID" in the request header field are set in DTE 11, and are deleted in LWP 16. "Content-Length" in the entity header field and the entity body are set in DTE 11, and are not changed in LWP 16. Also, "Content-Length" and "Content-Type" in the entity header field of the HTTP response header field and the entity body are set in the WWW server, and are not changed in LWP 16. When LWP 16 relays a HTTP request and a response in communication between DTE 11 and the WWW server, conversion in this manner is certainly carried out.

### (4-2) Content Substituting Acquisition Function

The content substituting acquisition function is a function of downloading contents from the WWW server in response to a request from the DTE, and forwarding to the DTE as a response to the above-mentioned request after converting the contents as required. It can be presupposed that content substituting acquisition function uses the HTTP processing function.

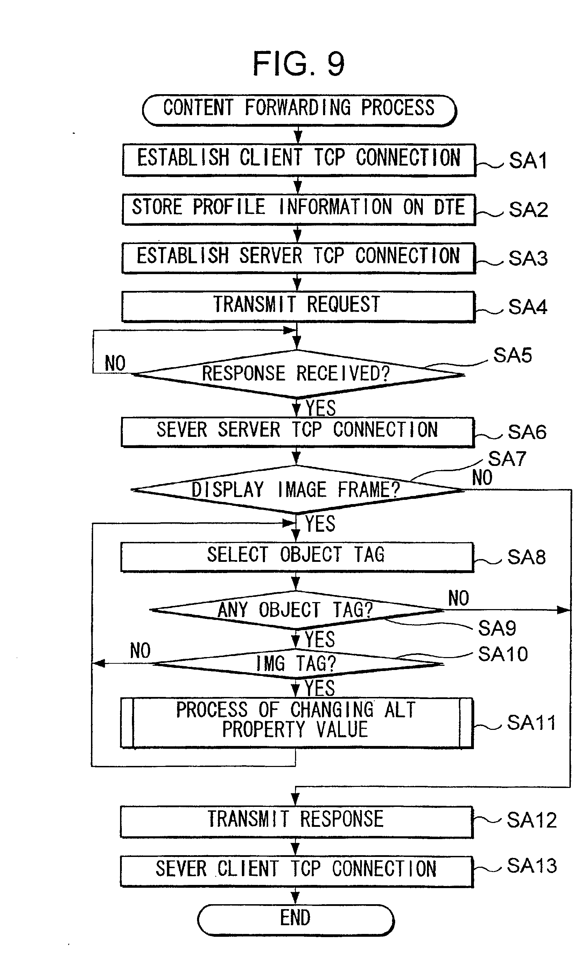

Fig.9 is a flowchart showing a flow of the content substituting acquisition process using the content substituting acquisition process that LWP 16 is equipped with. As shown in the figure, CPU 41 establishes the client TCP connection with the DTE in response to a request from the DTE (Step SA 1). Then, as CPU 41 receives a request using the GET method of HTTP via the client TCP connection, the profile information on the DTE is obtained from the request, and the profile information on the DTE is stored in temporary memory 45 along with information for identifying with certainty the client TCP connection (for instance, connection ID) (Step SA 2). Temporary memory 45, for instance, is DRAM (Dynamic RAM), and its response speed is faster compared to a hard disc and so forth. By storing the profile information in fixed memory 45 in this fashion, the process for using the profile information, which is explained afterwards can become faster.

Next, CPU 41 establishes the TCP connection (hereinafter, referred to as the server TCP connection) with the WWW server corresponding to the URI designated by the received request, and stores information for identifying with certainty the server TCP connection (for instance, connection ID) corresponding to the profile information in temporary memory 45 (Step SA 3). Furthermore, CPU 41 converts the request, and transmits the converted request via the server TCP connection (Step SA 4). At this stage, the request is transmitted via the server TCP connection from LWP 16.

Hereinafter, CPU 41 waits for a reception of a response to the above-mentioned request (Step SA 5). When the response has been received, the server TCP connection is severed (Step SA 6), and the profile information stored in temporary memory 45 corresponding to the connection ID of the severed server TCP connection is read out. Then, CPU 41 determines whether the profile information indicates a displaying of the image frames or not displaying of the image frames (Step SA 7).

If the profile information indicates the displaying of the image frames, CPU 41 analyzes (and changes) contents contained in the response. In other words, CPU 41 extracts tags for analyzing (hereinafter, the object tag) from contents in order, and repeatedly carries out the process of changing ALT property values set by IMG tags if object tags are IMG tags until the object tags run out (Step Sa 8 to SA 11). The specific detail of the process of changing ALT property values is explained afterwards.

As the above-mentioned analysis (and change) has been completed, CPU 41 transmits the response containing contents after analysis (and change) as the response to the request from the DTE via the corresponding client TCP connection (Step SA 12). Then, the client TCP connection is severed (Step SA 13).

### (4-2-1) Process of Changing ALT Property Value

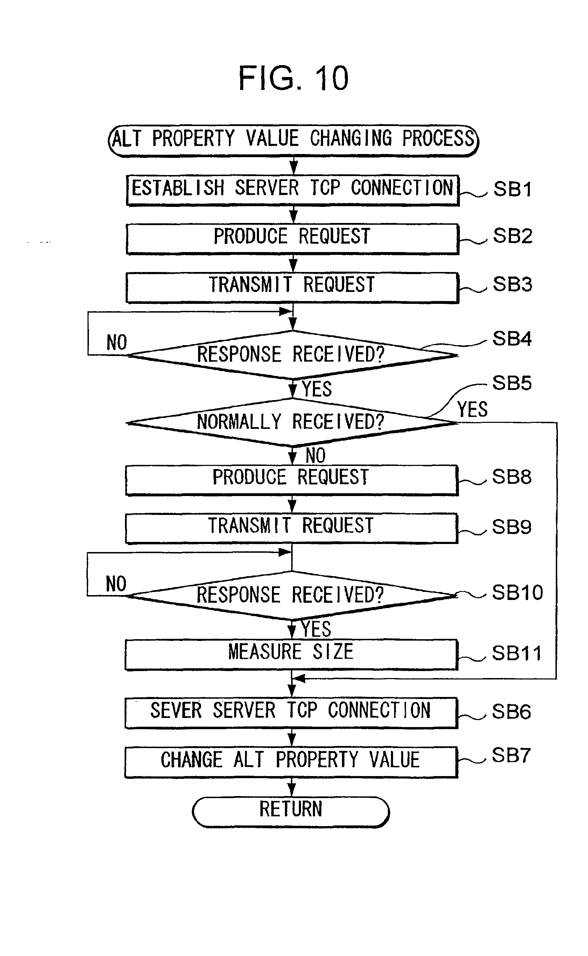

Fig.10 is a flowchart showing the flow of the process of changing the ALT property value, and the process shown in the figure is carried out when the object tag is an IMG tag. When the object tag is an IMG tag, CPU 41 establishes the server TCP connection with the WWW server corresponding to the URI designated by the IMG tag (Step SB 1), and produces a request using the HEAD method to obtain header information on the image file designated by the URI. Then, CPU 41 transmits the request via the server TCP connection (Step SB 3).

Hereinafter, CPU 41 waits for reception of the response to the request (Step SB 4). As the response is received, CPU 41 determines whether the response is the proper response containing the above-mentioned header information (Step SB 5). When the response is proper, CPU 41 severs the server TCP connection (Step SB 6), and changes the ALT property value of the IMG tag on the basis of the header information (Step SB 7).

Specifically, CPU 41 obtains the data size of the image file (for instance, 50KB) by reading out "Content-Length" in the entity header field of the response, and produces a letter string denoting the data size (for instance, "50KB"). Then, CPU converts the letter string into the designated fashion, and adds to the ALT property value of the IMG tag. For instance, when the ALT property value of the IMG tag is "SCENERY", the property value after change is "SCENERY [50KB]." In the present embodiment, the example is shown by displaying the data size in KB unit, and rounding off after the decimal point, but the value can be converted into other units and precision.

On the other hand, when the response from the WWW server is not proper, CPU 41 produces a request using the GET method to obtain the image file designated by the URI, which is designated by the IMG tag (Step SB 8), and transmits via the above-mentioned server TCP connection (Step SB 9). Hereinafter, CPU 41 waits for reception of the response to the above-mentioned request (Step SB 10). As the response is received, the data size of the image file contained in the response is measured (Step SB 11), and the server TCP connection is severed (Step SB 6). Then, the ALT property value is changed on the basis of the data size (Step SB 7). Measurement of the data size of the image file takes place when CPU 41, for instance, measures the data size of the entity body in the response.

The above-mentioned process of changing the ALT property value is repeated for the number of IMG tags (images) in contents.

### (5) Operation

The operation of the present embodiment varies according to the contents, the contents of profile information, the function of the WWW server. Thus, the operational patterns of the present embodiment are many. However, at this stage, only the operation showing the characteristics of the present invention is described by referring to Fig.9 to Fig.20. Identical codes are given to common portions in these figures.

However, according to the operation explained hereinafter, the contents that DTE 11 obtains from WWW server 14A is a text file containing IMG tags which designate an image file (aaa.fif) of 20 KB, and a client side image map which designates an image file (bbb.gif) of 50 KB. The major portions of the description of the text file are exemplified below.

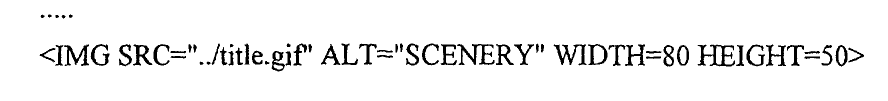

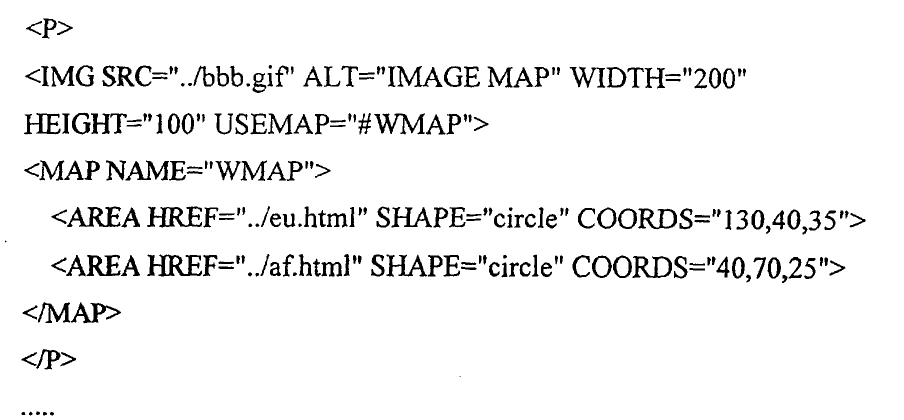

Furthermore, as in the operation explained below, the contents that DTE 11 obtains from WWW server 14 is a text file containing IMG tags which designate an image file (ccc.gif) of 10KB, and a client side image map which designates an image file (ddd.gif) of 70 KB. The major portions of the description of the text file are exemplified below.

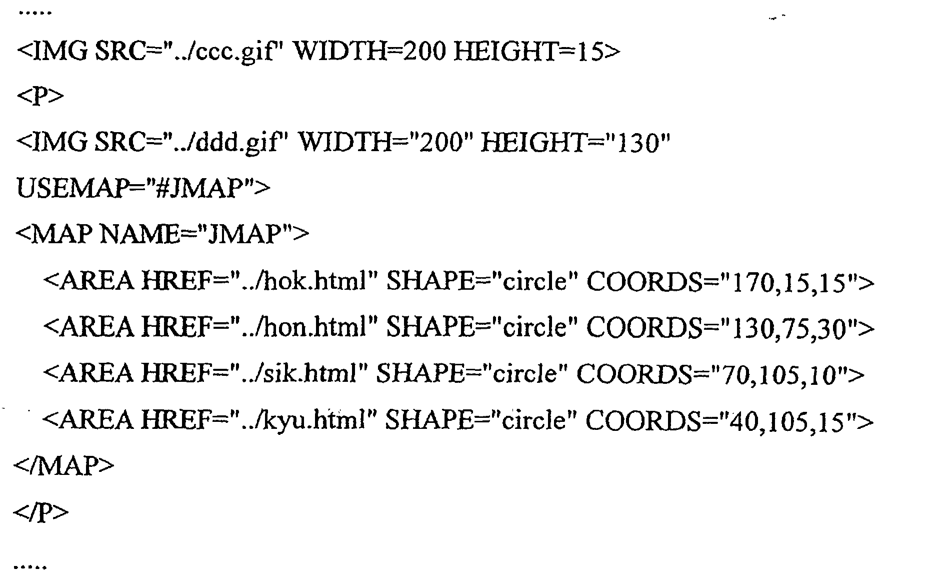

### (5-1) Operation When Image Frames Are not Displayed and WWW Server 14 Is Used

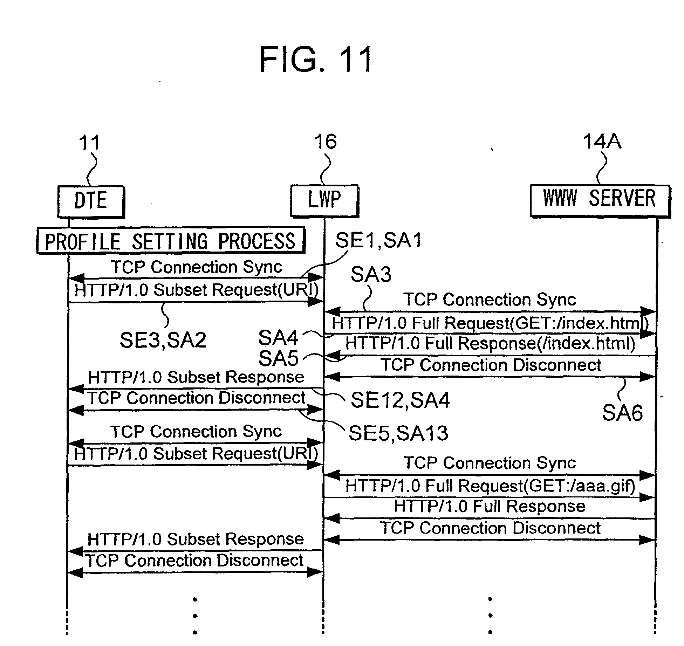

Fig. 11 is a sequence diagram showing the operation when the profile information shows that image frames are not displayed, and the contents are obtained from WWW server 14. As shown in the figure, in DTE 11, the profile information (in this case, image frames are not displayed) is at first set by the user in accordance with the operation. The detail of the setting process is as shown in Fig.4. As a result of the setting process, the profile information showing that image frames are not displayed is stored in EEPROM 362 of DTE 11.

Then, as the user operates DTE 11 and inputs a command for the acquisition of data from WWW server 14A, the TCP connection is established between DTE 11 and LWP 16 (Step SE1, SA 1). Then, in DTE 11, a request using the GET method is produced on the basis of the URI (http://www.*****.co.jp /index.html) and the profile information stored in EEPROM 362 (Step SE 2). Then, the request is transmitted to LWP 16 via the client TCP connection. (Step SE 3).

As LWP 16 receives the request (Step SA 2), the server TCP connection is established between LWP 16 and WWW server 14A (Step SA 3), the above-mentioned request after being changed by the HTTP processing function is transmitted to WWW server 14A from LWP 16 via the server TCP connection (Step SA 4). LWP 16 extracts the profile information from the request received via the client TCP connection, and momentarily stores in temporary memory 45.

As WWW server 14A receives the request from LWP 16 via the server TCP connection, WWW server 14A produces a response containing contents (index.html) corresponding to the URI designated by the request, and transmits to LWP 16 via the server TCP connection (Step SA 5). Hereinafter, the server TCP connection is severed (Step SA 6).

Next, LWP 16 determines whether the profile information on DTE 11 shows that image frames are displayed, or that image frames are not displayed (Step SA 7). As the profile information shows that the image frames are not displayed in the operation, the above-mentioned analysis (and change) are not carried out. The response from WWW server 14A to the request from DTE 11 is transmitted to DTE 11 via the above-mentioned client TCP connection after being converted by the above-mentioned HTTP processing function (Step SA 12), which is received by DTE 11 (Step SE 4).

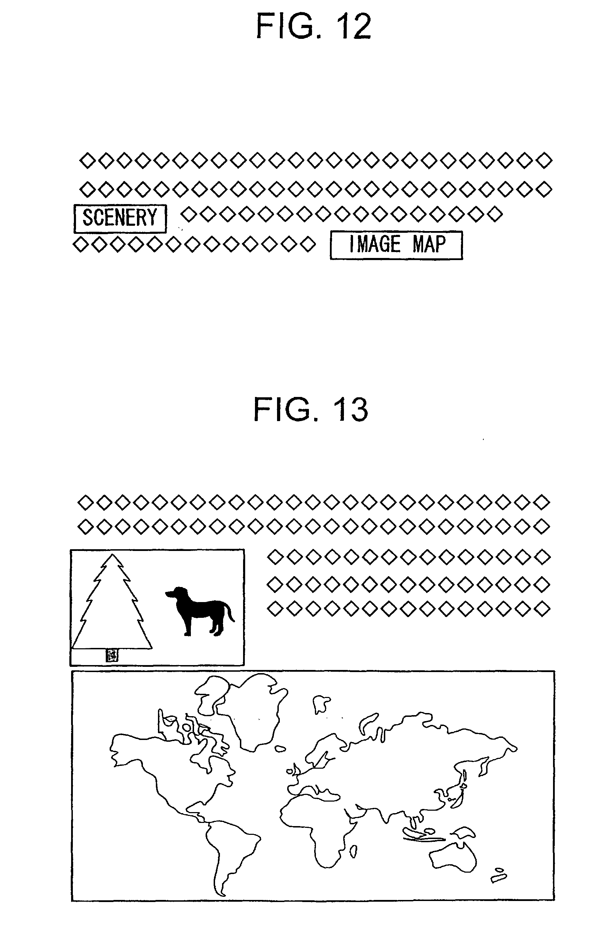

As DTE 11 receives the above-mentioned response, the above-mentioned client TCP connection is severed (Step SE 5, SA 13), and the interpretation and display of contents in the response are carried out (Step SE 6). As a result, on displaying unit 34, for instance, a picture shown in Fig.12 is displayed. No image data is obtained at this stage by DTE 11. Also, since the profile information stored in fixed memory 46 shows that image frames are not displayed, the minimum display domain required to display ALT property value of the IMG tag is ensured, and the ALT property value "SCENERY" is displayed in the domain. The same process is carried out with relation to the client side image map, and the ALT property value "IMAGE MAP" of the IMG tag, which composes the client side image map is displayed in the minimum required displaying domain.

As shown in Fig.11, along with the above-mentioned interpretation and display, the process of obtaining image data (aaa.gif) corresponding to the HERF property value of IMG tags from WWW server 14A is carried but in DTE 11. Since the operation of the present embodiment corresponding to the process is identical with the operation for obtaining the above-mentioned HTML data, the explanation is omitted. The process of obtaining image data in this manner is repeated for the number of IMG tags.

As image data corresponding to every IMG tag is carried out in DTE 11, the image displayed on displaying unit 34 is the image shown in Fig.13. In other words, images designated by IMG tags are properly displayed. As shown in Fig.12 and Fig.13, it is obvious that the layout of the screen is changed whenever any image data is obtained as the image frames are not displayed. Also, the client side image map becomes usable after the corresponding image is displayed.

### (5-2) Operation When Image Frames Are Not Displayed and WWW Server 14B Is Used

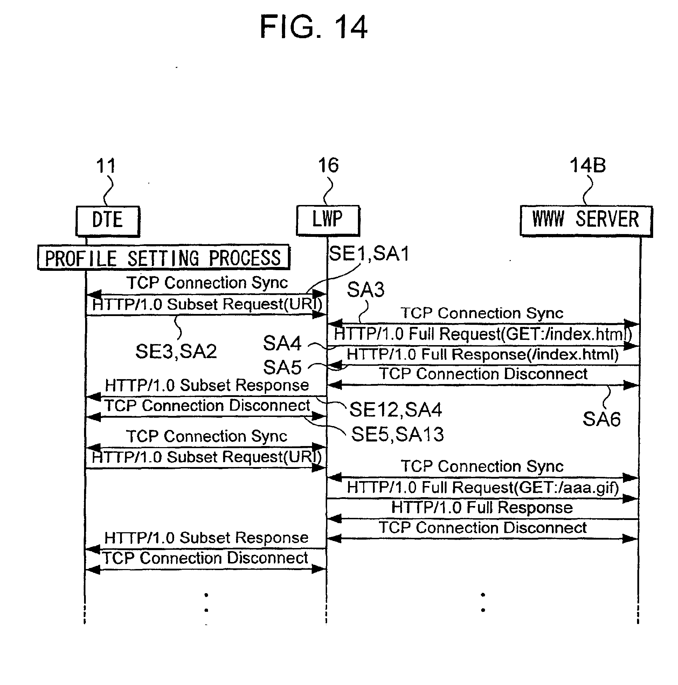

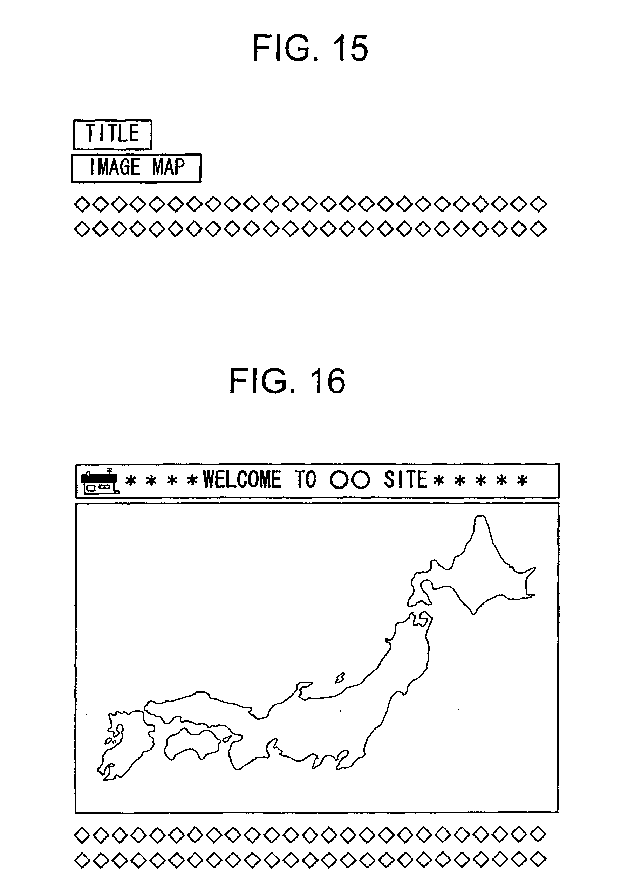

Fig.14 is a sequence diagram showing the operation when the profile information shows that image frames are not displayed, and contents are obtained from WWW server 14B. The operation shown in the figure is different from the operation shown in Fig.11 only with respect to contents which are the objects of acquisition are contents in WWW server 14B; therefore, the detailed description of the present operation is omitted. In the operation shown in Fig.14, the first images displayed on displaying unit 34 of DTE 11 are the images exemplified in Fig.15, the images displayed after all image data is obtained are the images exemplified in Fig.16.

### (5-3) Operation When Image Frames Are Displayed and WWW Server 14A Is Used

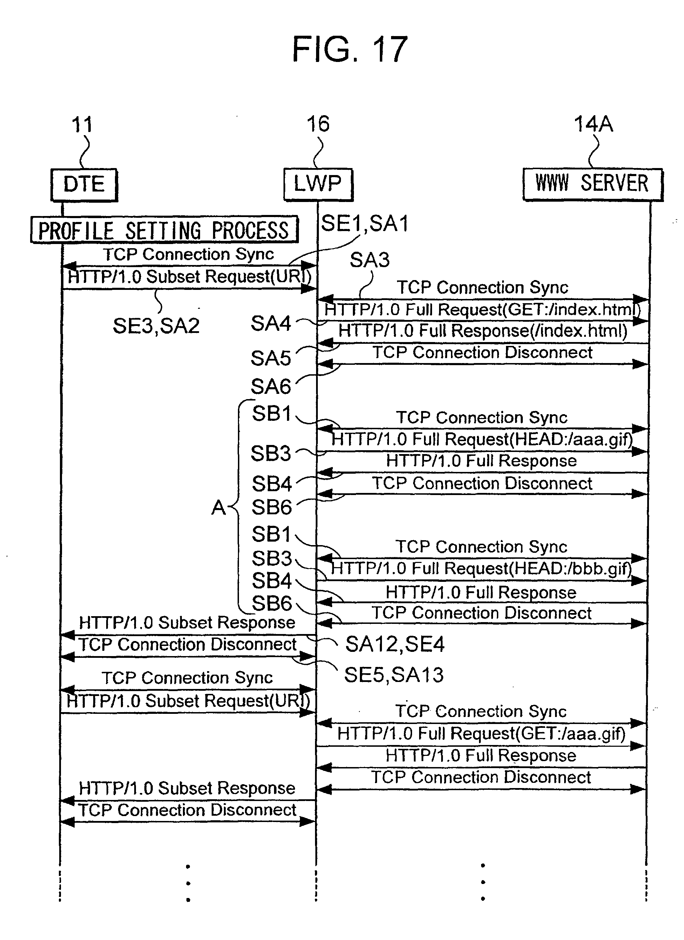

Fig.17 is a sequence diagram showing the operation when profile information displays image frames, and contents are obtained from WWW server 14A. As shown in the figure, in DTE 11, profile information (in this case, displaying image frames) is set first in accordance with operation by the user, and the profile information showing that image frames are displayed is stored in EEPROM 362. Hereinafter, the sequence is identical with Fig.11 up to Step SA 6. However, the profile information momentarily stored in temporary memory 45 of LWP 16 is the profile information, which shows that image frames are displayed.

As the server TCP connection between LWP 16 and WWW server 14A is severed (Step SA 6), LWP 16 determines whether the profile information on DTE 11 shows if image frames are displayed, or image frames are not displayed (Step SA 7). As the profile information shows that the image frames are displayed in the present operation, the above-mentioned analysis (and change) are carried out to contents contained in the response from WWW server 14A in LWP 16 (Step SA 8 to SA 11 and Sequence A). In other words, whenever an IMG tag becomes the object tag for analysis, the operation below is carried out.

The server TCP connection is established between WWW server 14A on the basis of the URI designated by the object tag (IMG tag) and LWP 16 (Step SB 1), and the request using the HEAD method for obtaining header information on the image file (aaa.gif) designated by the URI is produced in LWP 16 (Step SB 2). Then, the request is transmitted to WWW server 14A from LWP 16 via the server TCP connection (Step SB 3).

As WWW server 14A receives the request, header information on contents (aaa.gif) designated by the HEAD method of the request is obtained because the use of the HEAD method is allowed. Then, the response containing header information is returned to LWP 16 via the server TCP connection. (Step SB 4).

Then, the normality of the response is determined in LWP 16 (Step SB 5). The response is determined to be normal because it contains the header information on the desired image file, and the server TCP connection between LWP 16 and WWW server 14A is severed (Step SB 6). Then, the ALT property value of the IMG tag is changed on the basis of the header information (Step SB 7).

Since the data size of aaa.gif is 20KB, the information showing 20KB is stored in "Content-Length" in the entity header field of the response from WWW server 14A. In LWP 16, this information is read out, and the letter string corresponding to the information "20KB" is produced. Then, the information is added to the ALT property value of the IMG tag after being converted into "[20KB]." As a result, the ALT property value of the IMG tag becomes "SCENERY [20KB]."

As shown in Fig.17, the operation in this manner is carried out to bbb.gif, and the ALT property value of the IMG tag corresponding to bbb.gif becomes "IMAGE MAP [50KB]."

The response from WWW server 14A whose contents are changed, after being converted by the above-mentioned HTTP processing function, is transmitted to DTE 11 via the above-mentioned client TCP connection as the response to the request from DTE 11 (Step SA 12), and is received by DTE 11 (Step SE 4). The operation hereinafter is identical with the operation exemplified in Fig. 11.

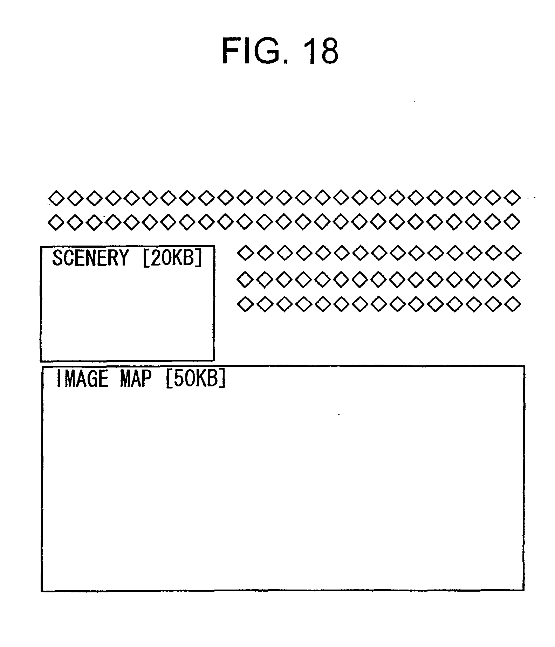

However, as a result of the interpretation and display of contents in DTE 11, the first images displayed on displaying unit 34, for instance are the images shown in Fig.18. In DTE 11, no image data is obtained at this stage. Also, because the profile information stored in fixed memory 36 shows that image frames are displayed, the image frame of the size denoted by the WIDTH property value and the HEIGHT property value of the IMG tag is displayed, and the ALT property value "SCENERY [20KB]" of the IMG tag is displayed in the image frame. The same thing takes place for the client side image map; therefore, the image frame of the size denoted by the WIDTH property value and the HEIGHT property value of the IMG tag, which compose the client side image map is displayed, and the ALT property value "IMAGE MAP [50KB]" of the IMG tag is displayed in the image frame.

As a result, the user can estimate the amount of time and money (when mobile packet communication network 12 charges on the basis of the packet quantity) required to obtain each image file in the primary stage of obtaining contents. Hence, the user can promptly determine whether to carry out subsequent operations (such as, commencement of obtaining contents, operation using software except for the web browser or operation without using DTE 11) without having to wait for the acquisition of image files.

### (5-4) Operation When Image Frames Are Displayed and WWW Server 14B Is Used

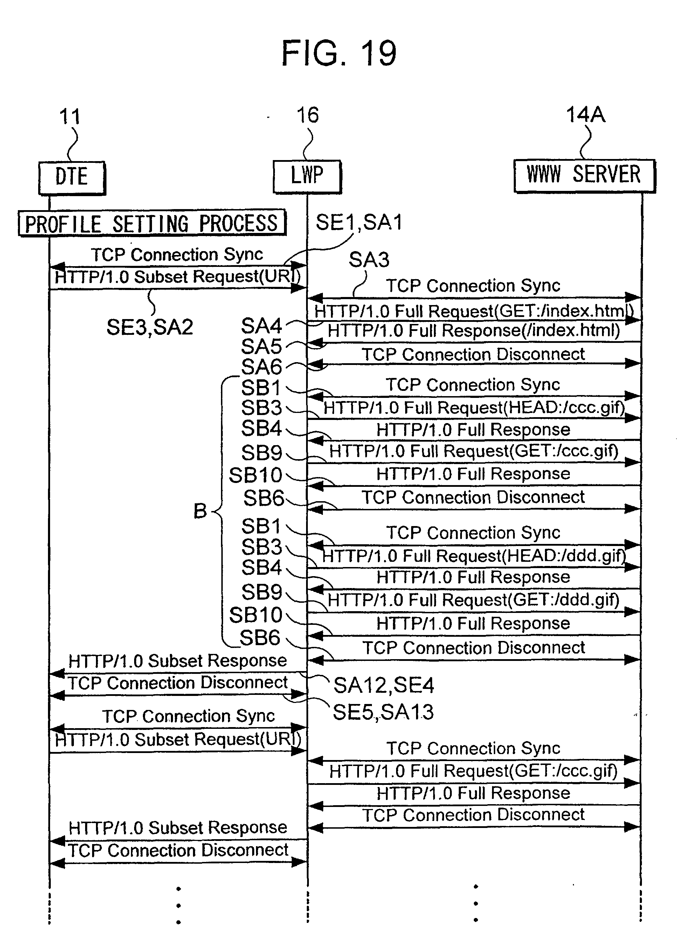

Fig.19 is a sequence diagram showing the operation when profile information displays image frames, and the contents are obtained from WWW server 14B. The operation is identical with the operation exemplified in Fig.17 until LWP 16 receives index.html from WWW server 14B, and severs the server TCP connection with WWW server 14B (Step SA 6). The operation of course differs in that contents, which are the objects of acquisition are contents in WWW server 14B as opposed to contents in WWW server 14A, but the explanation of the operation until the server TCP connection is severed is omitted since such operation can be easily envisaged from the operation exemplified in Fig.17.

LWP 16, which receives index.html from WWW server 14B, and severs the server TCP connection with WWW server 14B, determines whether the profile information on DTE 11 shows that image frames are displayed as in the operation exemplified in fig.17 (Step SA 7). Since the profile information shows that image frames are displayed in the present operation, the above-mentioned analysis (and change) are carried out to the contents contained in the response from WWW server 14B (Step SA8 to SA 11 and Sequence B). In other words, whenever the IMG tag becomes the object tag for analysis, the operation described below is carried out.

The server TCP connection is established between WWW server 14 B corresponding to the URI designated by the object tag (IMG tag) and LWP 16 (Step SB 1), the request using the HEAD method to obtain header information on the image file (ccc.gif) designated by the URI is produced in LWP 16 (Step SB 2). Then, the request is transmitted to WWW server 14B from LWP 16 via the server TCP connection (Step SB 3).

Since WWW server 14B, which receives the request does not allow the use of the HEAD method, the response containing information that the use of the HEAD method is not allowed is returned to LWP 16 via the server TCP connection (Step SB 4). When LWP 16 receives the response, the normality of the response is determined. In this instance, the response is determined to be not normal because the response contains information showing that the use of the HEAD method is not allowed (Step SB 5).

As a result, in LWP 16, the request using the GET method for obtaining ccc.gif is produced (Step SB 8), and the request is transmitted to WWW server 14B via the server TCP connection (Step SB 9). As WWW server 14B receives the request, the response containing ccc.gif designated by the request is produced, and the response is transmitted to LWP 16 via the server TCP connection as the response to the request (Step SB 10).

As LWP 16 receives the response, the data size of the entity body in the response is measured (Step SB 11). Then, the letter string "10KB" corresponding to the data size is produced, and is added to the ALT property value of the IMG tag after being converted into "[10KB]." As a result, the ALT property value of the IMG tag becomes "TITLE [10KB]" (Step SB 7). Since the entity body in the response is ccc.gif itself, the letter string showing the data size of ccc.gif is added to the ALT property value of the IMG tag. Also, in the meanwhile, the server TCP connection is severed (Step SB 6).

As shown in Fig.19, the operation in this manner is carried out to ddd.gif, and the ALT property value of the IMG tag corresponding to ddd.gif becomes "IMAGE MAP [70KB]."

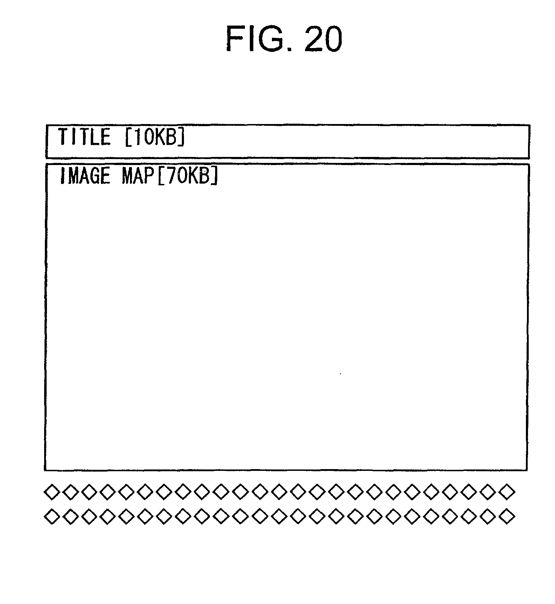

The response from WWW server 14B whose contents are changed in this manner, after being converted by the above-mentioned HTTP processing function, is transmitted to DTE 11 via the client TCP connection as a response to the request from DTE 11 (Step SA 12). The rest of the operation is identical with the operation exemplified in Fig.17. However, as a result of the interpretation and display of contents in DTE 11, the first image displayed on displaying unit 34, for instance, is the image shown in Fig.20. In other words, even when WWW server 14 does not allow the use of the HEAD method, the same feature as the operation exemplified in Fig.17 is provided for the user.

As explained above, according to the present embodiment, the data sizes of image data can be notified before the image data is forwarded to the user who tries to obtain contents containing images by using DTE 11, which is only equipped with existing functions. In the above-mentioned operation, an example in which WWW server determines whether to allow or not allow the HEAD method to be used is shown, but the present embodiment can also be applied in situations where allowing or not allowing the use of the HEAD method is dependent upon the acquired contents (such as image files).

### [Second Embodiment]

### (1) Entire Configuration

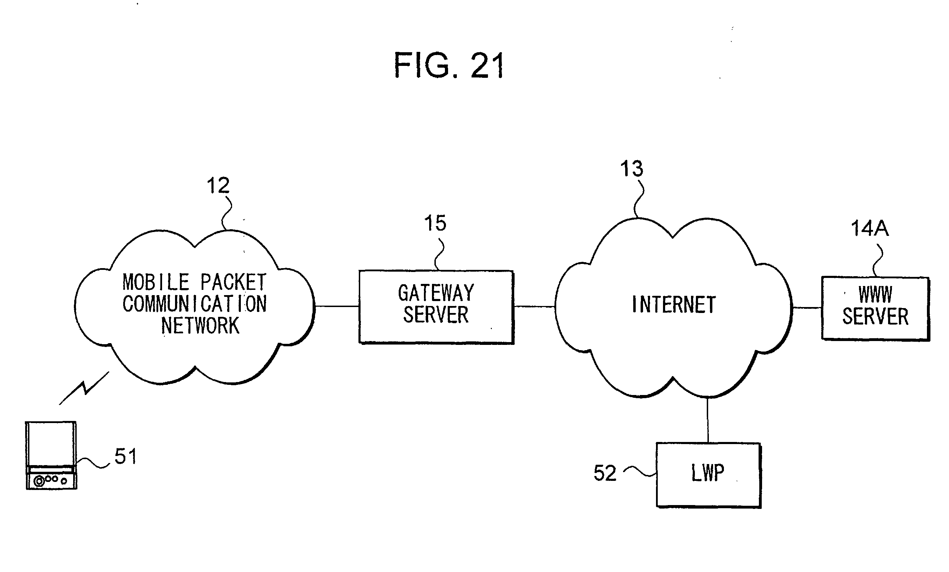

Fig.21 is a diagram showing the entire configuration of the data delivery system of the second embodiment of the present invention. The system shown in the figure basically accommodates the user, in the DTE for obtaining data via a communication network when images to be displayed are not displayed, by enabling him/her to estimate costs (time and the amount of communication) for obtaining image data by displaying sizes of image data, and enabling the user to use hyper links corresponding to images. With this the reduction of traffic in the communication network is also achieved.

The system shown in the figure differs from the system shown in Fig.1 in that, WWW server 14B is eliminated, DTE 51 is installed instead of DTE 11, and LWP 52 is installed instead of LWP 16. Since other portions are identical with the first embodiment, only these differences are explained hereinafter.

### (2) Configuration and Function of DTE 51

The hardware configuration of DTE 51 is almost identical with DTE 11 (refer to Fig.3).

However, the web browser is not stored in ROM 361, but is stored in EEPROM 362. In other words, DTE 51 stores the web browser so it can be re-used. Furthermore, not only the process carried out by DTE 11, but also the process described below is carried out when CPU 31 executes the web browser.

### ①ALT Property Monitoring Process

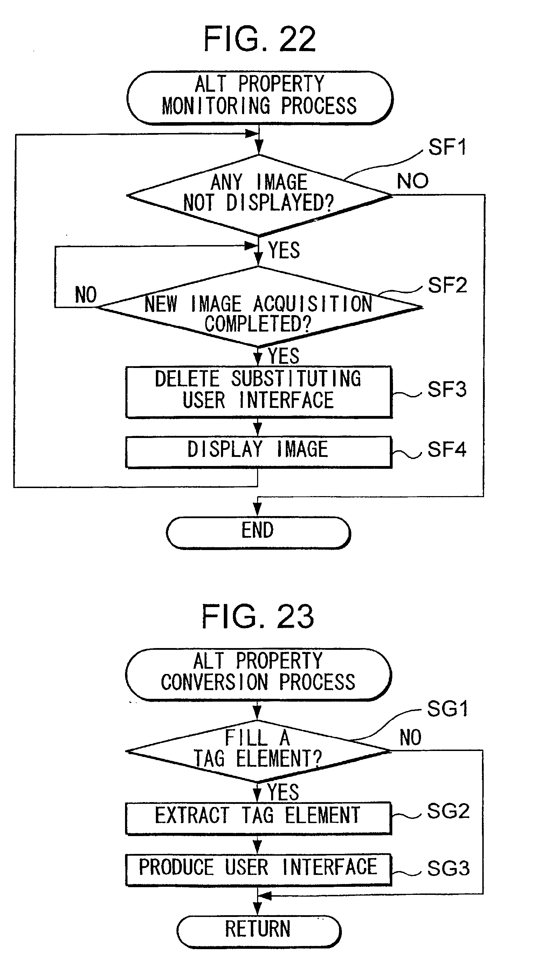

DTE 51 provides the user interface on the basis of the ALT property value of the IMG tag, but DTE 51 carries out the ALT property monitoring process shown in Fig.22 hereinafter. In other words, if a new image is obtained when an image, which is not displayed, still exists in the interpretation and displaying process of contents (Step SE 6 of Fig.7), DTE 51 displays the newly obtained image after deleting the substituting user interface that was provided, instead of the still existing earlier image which is not displayed (Step SF 1 to SF 4). In other words, DTE 51, displays an image after actively eliminating the substituting user interface on the basis of the ALT property value as opposed to overwriting the image on the ALT property value which is displayed.

### ②ALT Property Conversion Process

DTE 51 carries out the ALT property conversion process shown in Fig.23 when the object of interpretation and displaying is the client side image map (the image map which is achieved by combining an IMG tag and a MAP tag, and the HREF property is set in each domain in itself). In other words, DTE 51 determines whether HREF elements of an A tag are filled in the ALT property of the IMG tag, which composes the client side image map (Step SG 1). If the HREF elements are filled in, the elements are extracted (Step SG 2), and the interpretation and display of the IMG tag are carried out in a state in which these elements are eliminated from the ALT property value. Then, the user interface on the basis of the extracted elements are produced and provided (Step SG 3).

For instance, when the ALT property value of the IMG tag which composes the client side image map is "IMAGE MAP [50KB][@]../eu.html[@]../af.html", the A tag in which the link to ../eu.htmlis is filled in the letter string during display "../eu.html", and the A tag in which the link to ../af.html is filled in the letter string during display "../af.html" are virtually produced; these virtual A tags are handled in the same manner as normal A tags while the provision of the user interface on the basis of the ALT property value of the IMG tag is valid. "IMAGE MAP [50KB]" is handled as the ALT property value of the IMG tag.

### ③Program Download Renewal Function

DTE 51 is equipped with the function of downloading a program from LWP 52 in response to a command from the user. DTE 51 of course is equipped with the function of executing the program if the downloaded program is executable

### (3) Configuration and Function of LWP 52

The hardware configuration of LWP 52 is almost identical with LWP 16 (refer to Fig.8).

However, the software for carrying out the substituting process stored in fixed memory 46 of LWP 52 is different from the substituting process stored in fixed memory 46 of LWP 16. Also, in fixed memory 46 of LWP 52, is stored a program for renewing the web browser of DTE 51 when the program is executed by DTE 51. Next, among content substituting acquisition functions added to LWP 52 when CPU 41 of DTE 51 executes the software stored in fixed memory 46, the portions different from that in LWP 16 are explained.

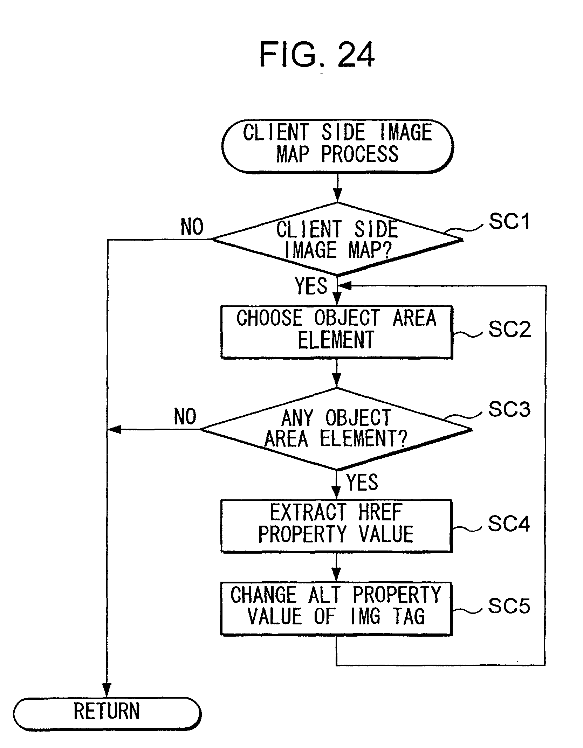

LWP 52 carries out the client side image map process shown in Fig.24 along with the processes shown Fig.9 and Fig.10 by using the content substituting acquisition function. The process shown in Fig.24 is the process carried out after Step SB 7 in Fig. 10. LWP 52, after changing the ALT property value in Step SB 7 shown in Fig.10, determines whether the object tag is the IMG tag composing the client side image map in Step SC 1 in Fig.24. If it is determined that the object tag is not the IMG tag composing the client side image map, the next object tag is chosen in Step SA 8 shown in Fig.9.

When the object tag is the IMG tag composing the client side image map in Step SC 1 shown in Fig.24, the process for choosing AREA elements which are the objects (hereinafter, object AREA elements) from a plurality of AREA elements designated by the MAP tag composing the client side image map is repeated until all object AREA elements have been covered. (Step SC 2 to Step SC 3).

Also, whenever an object AREA element is chosen, the HREF property value designated by the AREA element is extracted (Step SC 4), and the ALT property value of the IMG tag is changed on the basis of the extracted HREF property value (Step SC 5). For instance, when the HREF property designated by the object AREA element of the MAP tag composing the client side image map is ../af.html, the letter string "[@]../af.html" is added to the ALT property value of the IMG tag.

### ④ Operation

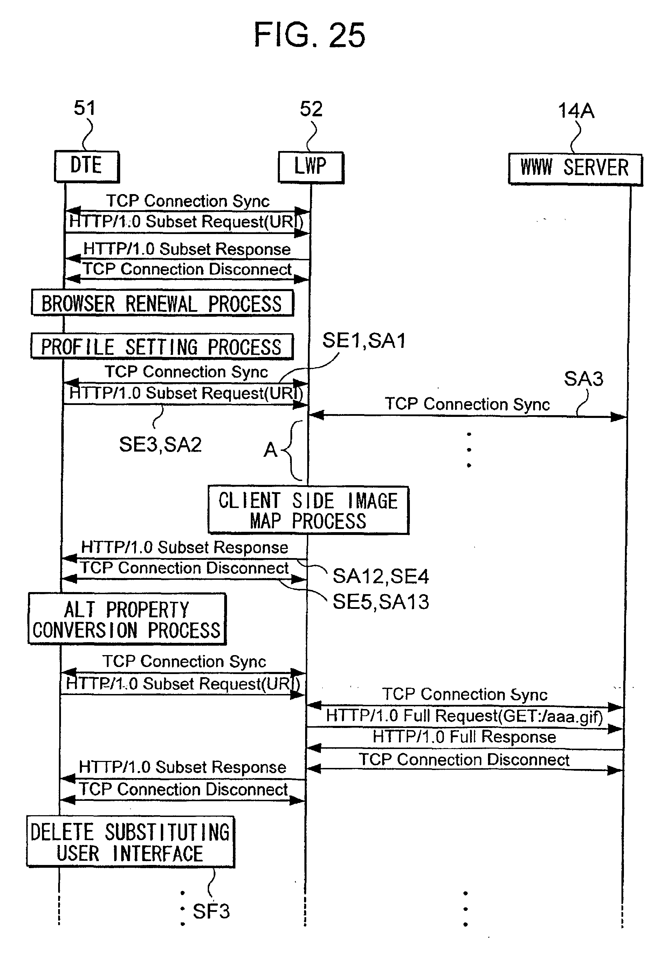

The operation of the present embodiment differs according to the contents to be acquired, the contents of profile information, and the function of the WWW server. Several patterns of the operation exist, but only some examples of the operation which are different from the first embodiment (in other words, the operation when image frames are displayed) are explained mainly by referring to Fig.25. In Fig.25, the same codes are given to the portions, which are common to other figures. Also, the presupposition of the operation explained below is identical with that of the first embodiment.

Fig.25 is a sequence diagram showing the operation when profile information shows that image frames are displayed. As shown in the figure, as the user commands the download of a program to renew the web browser, the TCP connection is established between DTE 51 and LWP 52, and the delivery of the program to renew the web browser is requested from DTE 51 to LWP 52. Then, after the program is delivered from LWP 52 to DTE 51 in response to the request, the connection is severed. Then, in response to the command of the user, as the program is executed in DTE 51, the web browser stored in EEPROM 362 is renewed. Hereinafter, in DTE 51, the process using the renewed web browser is carried out.

The operation hereinafter is identical with the operation exemplified in Fig.17 until sequence A is completed, and the ALT property value of the object tag after the completion of sequence A becomes "IMAGE MAP [50KB]." Then, in LWP 52, it is determined whether the object tag is the IMG tag composing the client side image map. (Step SC 1). In the present operation, since the object tag when sequence A is completed, is the IMG tag composing the client side image map, in LWP 52, the HREF property values designated by AREA elements are extracted with regard to each AREA element designated by the MAP tag composing the client side image map, and the ALT property value of the IMG tag is changed on the basis of the extracted HREF property values (Step SC 2 to SC 5). As a result, the ALT property value of the IMG tag becomes "IMAGE MAP [50KB)[@]../eu.html[@]..af.html."

The response from WWW server 14A in which the description of the text file contained is changed, is transmitted to DTE 51 via the client TCP connection as the response to the request from DTE 51 (Step SA 12) and is received by DTE 51 (Step SE 4) after being converted by the above-mentioned HTTP processing function. As DTE 51 receives the above-mentioned response, the client TCP connection with LWP 52 is severed (Step SE 5, SA 13), and the contents in the response are interpreted and displayed in DTE 51.

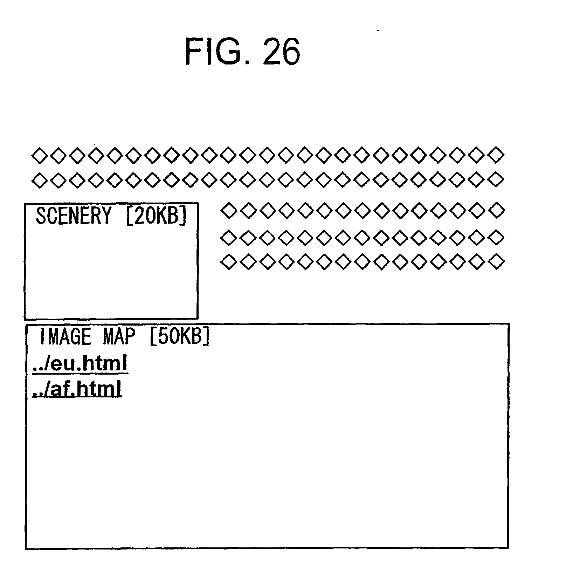

The interpretation and displaying process in the second embodiment is different from the first embodiment in that the link is provided on the basis of the ALT property value of the IMG tag composing the client side image map. As a result of the process of interpretation and displaying in this manner, the image shown in Fig.26 is shown first in displaying unit 34 of DTE 51. In the image, "../eu.html" and "../af.html" are links the user can choose. In other words, in the present operation, even if the image of the client side image map is not displayed, and the function of the client side image map cannot be used, the user can use links filled in the client side image map.

In the present operation, although the operation of obtaining the image file by using the SRC property value of the IMG is identical with that of the first embodiment, the operation of DTE 51 after each image file is obtained is different from the first embodiment. In DTE 51, after obtaining aaa.gif, the display on the basis of the ALT property value of the IMG tag corresponding to aaa.gif is deleted, and the image expressed by aaa.gif is displayed in the image frame corresponding to the IMG tag. Then, in DTE 51, after obtaining bbb.gif, the user interface (link) on the basis of the ALT property value of the IMG tag corresponding to bbb.gif is deleted, the image expressed by bbb.gif is displayed in the image frame corresponding to the IMG tag. As a result, the image shown in Fig.13 is displayed on displaying unit 34 of DTE 51, and the client side image map becomes valid. At this stage, since links on the basis of the ALT property value are deleted, these links and the link of the client side image map do not conflict.

As explained above, according to the present embodiment, the identical effects with the same embodiment can be obtained, and the links filled in the client side image map can be provided without changing the layout of the whole content before image data is forwarded to the user who is about to use the client side image map. Also, the user can easily renew the web browser of DTE 51 when the specification of LWP 52 is changed and so forth.

### [Modification]

In the above-mentioned second embodiment, an example of renewing the web browser of DTE 51 by using the program downloaded from LWP 52 is explained, but the program can be downloaded from a site different from LWP 52. Also, the program of the web browser itself can be downloaded as opposed to the program for renewing the web browser. Furthermore, the delivery means for the program is not limited to communication, but any medium such as an optical recording medium, a magnetic recording medium or a semiconductor memory can be used. Also, in the second embodiment, an example of providing links in the image frame of the client side image map is shown, but links can be provided outside of the image of the client side image map. In this case, since links do not conflict, the user interface on the basis of the ALT property value of the IMG tag corresponding to the image data does not have to be actively deleted when the acquisition of image data is completed, and DTE 51 does not have to be equipped with the function for carrying out the ALT property monitoring process.

Also, in the above-mentioned embodiment, the data size of the image file itself is displayed, but information on the data size also can be displayed. For instance, "[SMALL]" can be displayed when the data size is 10KB or below, "[MEDIUM]" can be displayed when the data size is between above 10KB and 50KB or below, and "[LARGE]" can be displayed when the data size is 50KB or above. The same can be applied to the process carried out to the client side image map. For instance, instead of adding a letter string denoting a link address to the ALT property value, it is possible to enable the link function to be used after the client side image map becomes valid. In this case, since link addresses are displayed even when the client side image map cannot be used, the user can easily determine whether to wait until the client side image map can be used.

Also, in the above-mentioned embodiment, the example of displaying the data size of the image in the image frame is shown, but the data size can be displayed outside of the image frame. Furthermore, the example of displaying the data size of the image or providing links only when the image frame is displayed is shown, but the data size of the image can be displayed, or links can be provided also when the image frame is not displayed. Also, the data size of the image can be displayed, or links can be provided only when the image frame is not displayed.

For instance, when the first embodiment is modified to display data sizes of images, or provide links when image frames are not displayed, the processes relating to Step SA 2 and SA 7 in Fig.9 are unnecessary. As a result, in the DTE, images shown in Fig.18 are displayed when image frames are displayed, and "SCENERY [20KB]" after changing "SCENERY" and "IMAGE MAP [50KB]" after changing "IMAGE MAP" in Fig.12 are displayed when image frames are not displayed. Also, when the first embodiment is modified to display data sizes of images, or provide links only when image frames are not displayed, "YES" and "NO" in Step SA 7 of Fig.9 are reversed. As a result, in the DTE, images in which "SCENERY [20KB]" is changed to "SCENERY", and "IMAGE MAP [50KB]" is changed to "IMAGE MAP" in Fig.18 are displayed when image frames are displayed. When image frames are not displayed, images in which "SCENERY" is changed to "SCENERY [20KB]", and "IMAGE MAP" is changed to "IMAGE MAP [50KB]" in Fig.12 are displayed. A similar modification to these can also be applied to the second embodiment.

Also, the DTE can perform communication via a communication terminal being equipped with the communication function. In this case, the DTE does not have to be equipped with the communication function. Also, the communication network between the DTE and the LWP can be either a fixed network or a line switching network. Furthermore, the communication network between the LWP and the WWW server is not limited to the Internet, but the communication network can be anything as far as it achieves an identical function to that of the web. The communication network, for instance can also be called an intranet.

Also, in the above-mentioned embodiment, presuppositions of the explanation are HTML and HTTP, but the application scope of the present invention is not limited to these, and the present invention can be applied to the linguistic and the communication protocol environment in which the text data is downloaded, before the image data designated in the data is downloaded. Furthermore, the present invention can also be applied when the LWP and the WWW server are unified. However, in this case, communication between the LWP and the WWW server is, for instance interprocess communication. Also, the mode of unifying the LWP and the gateway server is included in the scope of the present invention.

### Effects of the Present Invention

As explained above, by the present invention, since the description of the text file is changed on the basis of information on the image file corresponding to the text file in the substituting server device (or information which cannot be used before the image file is obtained), the user of the client device which receives the text file can detect information on the image file (or information which cannot be used before the image file is obtained). Such information is helpful for determination, operation and so forth of the user. Also, the text file is obtained more promptly compared to when the image file is obtained; therefore, the present invention is effective in promptly providing helpful information for determination, operation and so forth of the user which cannot be provided by conventional art.

Also, when a substituting server device writes link information showing links which cannot be used before the image file is obtained on the text file as substituting displayed letter strings, in the client side image map, the user can use links designated by the map without waiting to obtain an image file by prompting the client device to obtain link information from substituting displayed letter strings, and provide the user interface on the basis of the extracted link information.

## Claims

1. A relaying method comprising:
a text obtaining process for a substituting server which relays data between a server device containing a text file and image files and a client device to obtain said text file from said server device;
a relevant information obtaining process for said substituting server to obtain information relating to image files corresponding to a text file obtained in said text obtaining process;
a text changing process for said substituting server to change description of a text file obtained in said text obtaining process on the basis of information obtained in said relevant information obtaining process; and
a text transmission process for said substituting server to transmit a text file whose description is changed in said text changing process to a client device.

2. A relaying method according to Claim 1,
wherein data sizes of image files corresponding to a text file obtained in said text obtaining process is obtained in said relevant information obtaining process, and
wherein description of a text file obtained in said text obtaining process is changed in said text changing process on the basis of data sizes obtained in said relevant information obtaining process.

3. A relaying method according to Claim 2 further comprising:
a letter string production process for producing letter strings denoting data sizes obtained in said relevant information obtaining process,
wherein description of said text file is changed in said text changing process, by writing letter strings produced in said letter string producing process into a text file obtained in said text file obtaining process.

4. A relaying method according to Claim 1 further comprising:
a header obtaining process for obtaining header information on image files corresponding to a text file obtained in said text obtaining process,
wherein data sizes of said image files are obtained in said relevant information obtaining process on the basis of header information obtained in said header obtaining process.

5. A relaying method according to Claim 2 further comprising:
an image obtaining process for obtaining image files corresponding to a text file obtained in said text file obtaining process,
wherein said data sizes are obtained in said relevant information obtaining process by measuring image files obtained in said image obtaining process.

6. A relaying method according to Claim 1,
wherein substituting displayed letter strings written to be displayed when images corresponding to said image files are not displayed in a text file obtained in said text obtaining process, is changed in said text changing process on the basis of information obtained in said relevant information obtaining process.

7. A relaying method according to Claim 6 further comprising:
an image frame information obtaining process for obtaining, from said client device prior to said text changing process, information showing whether to display image frames when images are not displayed,
wherein said text changing process is executed when information obtained in said image frame information obtaining process is information for displaying image frames when images are not displayed.

8. A relaying method according to Claim 6 further comprising:
an image frame information obtaining process for obtaining, from said client device prior to said text changing process, information showing whether to display image frames when images are not displayed,
wherein said text changing process is executed when information obtained in said image frame information obtaining process is information for not displaying image frames when images are not displayed.

9. A relaying method according to Claim 6 further comprising:
a request reception process for receiving, prior to said text obtaining process, a request for obtaining said text file from said client device; and
an image frame information extraction process for extracting from a request received in said request reception process prior to said text changing process, information showing whether image frames are displayed when images are not displayed in said client device,
wherein said text changing process is executed when information obtained in said image frame information obtaining process is information for displaying image frames when images are not displayed.

10. A relaying method according to Claim 6 further comprising:
a request reception process for receiving, prior to said text obtaining process, a request for obtaining said text file from said client device; and
an image frame information extraction process for extracting from a request received in said request reception process prior to said text changing process, information showing whether image frames are displayed when images are not displayed in said client device,
wherein said text changing process is executed when information obtained in said image frame information obtaining process is information for not displaying image frames when images are not displayed.

11. A relaying method according to Claim 1,
wherein a bandwidth of a communication path between said client device and said substituting server device is narrower than a bandwidth of a communication path between said substituting server device and said server device.

12. A relaying method comprising:
a text obtaining process for a substituting server device which relays data between a server device containing a text file and image files and a client device for obtaining said text file from server device;
a related information extraction process for said substituting server to extract related information which cannot be obtained before image files corresponding to said text file are obtained in said client device, from a text file obtained in said text obtaining process;
a text changing process for said substituting server to change description of a text file obtained in said text obtaining process on the basis of said related information; and
a text transmission process for said substituting server to transmit a text file whose description is changed in said text changing process to said client device.

13. A relaying method according to Claim 12,
wherein link information in a client side image map of said image file is extracted from said text file as said related information in said related information extraction process.

14. A relaying method according to Claim 12 further comprising:
a letter string production process for producing a letter string showing link information extracted in said related information extraction process,
wherein description of said text file is changed in said text changing process by writing a letter string produced in said letter string production process into a text file obtained in said text obtaining process.

15. A relaying method according to Claim 12 further comprising:
a link letter string production process for producing a letter string for said client device to achieve a link, on the basis of link information extracted in said related information extraction process,
wherein description of said text file is changed by writing a letter string produced in said link letter string production process into a text file obtained in said text obtaining process.

16. A relaying method according to Claim 12,
wherein substituting displayed letter strings written to be displayed when an image required for said client side image map is not displayed in a text file obtained in said text obtaining process, is changed in said text changing process on the basis of link information extracted in said related information extraction process.

17. A relaying method according to Claim 15 further comprising:
an image frame information obtaining process for obtaining from said client device, prior to said text changing process, information showing whether to display image frames when images are not displayed;
wherein said text changing process is executed when information obtained in said image frame information obtaining process is information for displaying image frames when images are not displayed.

18. A relaying method according to Claim 15 further comprising:
an image frame information obtaining process for obtaining from said client device, prior to said text changing process, information showing whether to display image frames when images are not displayed;
wherein said text changing process is executed when information obtained in said image frame information obtaining process is information for not displaying image frames when images are not displayed.

19. A relaying method according to Claim 15 comprising:
a request reception process for receiving, prior to said text obtaining process, a request for obtaining said text file from said client device; and
an image frame information extraction process for extracting from a request received in said request reception process prior to said text changing process, information showing whether image frames are displayed when images are not displayed in said client device,
wherein said text changing process is executed when information obtained in said image frame information obtaining process is information for displaying image frames when images are not displayed.

20. A relaying method according to Claim 15 further comprising:
a request reception process for receiving, prior to said text obtaining process, a request for obtaining said text file from said client device; and
an image frame information extraction process for extracting from a request received in said request reception process prior to said text changing process, information showing whether image frames are displayed when images are not displayed in said client device,
wherein said text changing process is executed when information obtained in said image frame information obtaining process is information for not displaying image frames when images are not displayed.

21. A relaying method according to Claim 12,
wherein a bandwidth of a communication path between said client device and said substituting server device is narrower than a bandwidth of a communication path between said substituting server device and said server device.

22. A user interface provision method,
wherein, from a server device containing a text file and image files, said text file is obtained via a substituting server device, and user interfaces are provided in addition on the basis of an obtained file in a client device for obtaining image files corresponding to said text file comprising:
a text obtaining process for obtaining said text file;
a link information extraction process for extracting link information from substituting displayed letter strings written to be displayed in a text file obtained in a text obtaining process when images are not displayed; and
a user interface provision process for providing user interfaces by using link information extracted in a link information extraction process.

23. A user interface provision method according to Claim 22 further comprising:
an image obtaining process for obtaining image files following said user interface provision process;
a provision forbiddance process for forbidding provision of user interfaces being provided instead of images expressed by image files obtained in said image obtaining process; and
an image displaying process for displaying images expressed by image files obtained in said image obtaining process.

24. A substituting server device for relaying data between a client device and a server device comprising:
a first communication means for communicating with a server device containing a text file and image files;
a second communication means for communicating with a client device for obtaining said text file and said image files corresponding to said text file from said server device;
a text obtaining means for obtaining said text file from a server device by using said first communication means;
a relevant information obtaining means for obtaining by using said first communication means, relevant information to image files corresponding to a text file obtained by said text obtaining means;
a text changing means for changing description of a text file obtained by said text obtaining means on the basis of information obtained by said relevant information obtaining means; and
a text transmission means for transmitting to said client device, a text file whose description is changed by said text changing means by using said second communication means.

25. A substituting server device for relaying data between a client device and a server device comprising:
a first communication means for communicating with a server device containing a text file and image files;
a second communication means for communicating with a client device for obtaining said text file and said image files corresponding to said text file from said server device;
a text obtaining means for obtaining said text file from a server device by using said first communication means;
a related information extraction means for extracting from a text file obtained by said text obtaining means by said client device, information which cannot be obtained before image files corresponding to said text file are obtained;
a text changing means for changing description of a text file obtained by said text obtaining means on the basis of information extracted by said related information extraction means; and
a text transmission means for transmitting to said client device, a text file whose description is changed by said text changing means by using said second communication means.

26. A client device, which communicates with a server device containing a text file and image files corresponding to said text file via said substituting server comprising:
a communication means for communicating with a substituting server device;
a link information extraction means for extracting link information from substituting displayed letter strings written to be displayed when images are not displayed in a text file obtained by a text obtaining means; and
a user interface provision means for providing user interfaces by using link information extracted by a link information extraction means.

27. A program causing a computer which relays data between a server device containing a text file and image files, and a client device for obtaining image files corresponding to said text file after said text file is obtained, to execute:
a text obtaining process for obtaining said text file from said server device;
a relevant information obtaining process for obtaining information relating to image files corresponding to a text file obtained in said text obtaining process;
a text changing process for changing description of a text file obtained in said text obtaining process on the basis of information obtained in said relevant information obtaining process; and
a text transmission process for transmitting to said client device, a text file whose description is changed in said text changing process.

28. A computer-readable recording medium storing a program claimed in Claim 27.

29. A program causing an above-mentioned computer device to execute:
a text obtaining process for obtaining said text file from said server device;
a related information extraction process for extracting, from a text file obtained in said text obtaining process, information which cannot be obtained before image files corresponding to said text file are obtained by said client device;
a text changing process for changing description of a text file obtained in said text obtaining process on the basis of information extracted in said related information extraction process; and
a text transmission process for transmitting to said client device a text file whose description is changed in said text changing process.

30. A computer-readable recording medium storing a program claimed in Claim 29.

31. A program for causing a computer which obtains from a server device containing a text file and image files, said text file via a substituting server device, and image files corresponding to said text file in addition, to execute:
a text obtaining process for obtaining said text file;
a link information extraction process for extracting link information from substituting displayed letter strings written to be displayed when images are not displayed in a text file obtained in a text obtaining process; and
a user interface provision process for providing user interfaces by using link information extracted in a link information extraction process.

32. A computer-readable recording medium storing a program claimed in Claim 31.
